(19) Europäisches Patentamt
European Patent Office
Office européen des brevets

(11) **EP 2 093 956 A2**

(12) **EUROPÄISCHE PATENTANMELDUNG**

(43) Veröffentlichungstag:
26.08.2009 Patentblatt 2009/35

(51) Int Cl.:
*H04L 27/02* (2006.01)  *H04L 27/06* (2006.01)

(21) Anmeldenummer: 09001588.4

(22) Anmeldetag: 05.02.2009

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **20.02.2008 DE 102008010254**

(71) Anmelder: **Atmel Automotive GmbH**
**74072 Heilbronn (DE)**

(72) Erfinder:
• **Großkinsky, Ulrich, Dipl.-Ing. (FH)**
**74861 Neudenau (DE)**
• **Blatz, Werner, Dipl.-Ing. (FH)**
**74211 Leingarten (DE)**

(74) Vertreter: **Müller, Wolf-Christian**
**Koch Müller**
**Patentanwaltsgesellschaft mbH**
**Maaßstrasse 32/1**
**69123 Heidelberg (DE)**

(54) **Empfangsschaltung und Verfahren zum Empfangen eines Signals einer Amplitudenumtastung**

(57) Empfangsschaltung und Verfahren zum Empfangen eines Signals (RF) einer Amplitudenumtastung,
- bei dem aus einem In-Phase-Eingangssignal (I) und einem Quadratur-Phase-Eingangssignal (Q) zumindest ein Exponenten-Signal (E), ein um den Exponenten bereinigtes In-Phase-Signal (I') und ein um den Exponenten bereinigtes Quadratur-Phase-Signal (Q') erzeugt werden,
- bei dem eine Amplitude (A) als Summe aus mehreren Summanden (A1, A2, A3, A4) bestimmt wird, wobei die Summanden (A1, A2, A3, A4) aus dem Exponenten-Signal (E) und/oder aus dem um den Exponenten bereinigten In-Phase-Signal (I') und/oder aus dem um den Exponenten bereinigten Quadratur-Phase-Signal (Q') bestimmt werden, und
- bei dem die Amplitude (A) demoduliert wird.

FIG.1

EP 2 093 956 A2

**Beschreibung**

Die vorliegende Erfindung betrifft eine Empfangsschaltung und ein Verfahren zum Empfangen eines Signals einer Amplitudenumtastung und eine Verwendung.

Eine Amplitudenumtastung wird auch als ASK-Modulation (engl. ASK: Amplitude Shift Keying) bezeichnet. Sie ist eine digitale Modulationsart. Dabei wird die Amplitude des Trägersignals verändert, um verschiedene Werte - beispielsweise eine Null und eine Eins oder ein Wort mit mehreren Bits - zu übertragen.

Aus der DE 10 2006 005 032 A1 ist ein Empfangsverfahren mit digitaler Pegeleinstellung um einen ersten Stellfaktor im Analogteil und stufenweiser Pegelveränderung im Digitalteil bekannt.

Die DE 692 24 925 T2 zeigt ein System zum Steuern von Phasen- und Verstärkungsfehlern in einem direkt umsetzenden I/Q-Empfänger. Dabei werden I und Q Basisbandsignalkomponenten, die sich in Quadratur befinden, erzeugt. Diese Signale werden dann bei Niederfrequenzen auf getrennten Signalkanälen unabhängig gefiltert und verstärkt. Die als Ergebnis des Mischverfahrens ausgebildeten I und Q Komponenten gestatten, dass das Signal günstig demoduliert werden kann. Das System arbeitet durch Erzeugen neuer I' und Q' Signale auf der Basis der I und Q Basisbandkomponenten. Die I' und Q' Signale werden so ausgebildet, dass die cos (2Phi) und sin (2Phi) entsprechen, wobei Phi den Phasenwinkel darstellt, von dem die ursprünglichen I und Q Komponenten eine Funktion darstellen. Die I' und Q'-Signale werden dann bezüglich der Signalamplitude normiert, um I" und Q" Signale zu erzeugen, die unabhängig von Amplitudenwirkungen sind. Die sich ergebenden I" und Q" Signale werden dann gefiltert, um DCI und DCQ Signale zu erzeugen, die ihren DC-Komponenten entsprechen. Die DC-Komponenten DCI und DCQ korrelieren mit den Verstärkungs- und Phasenfehlern im Empfänger, so dass eine Verstärkungs- und Phasenfehlerkorrektur möglich ist. Zur Ausbildung der Korrekturfunktion sind eine Vielzahl von Multiplizierern und Addierern vorgesehen.

Der Erfindung liegt die Aufgabe zu Grunde eine Empfangsschaltung zum Empfang eines Signals einer Amplitudenumtastung möglichst zu verbessern.

Diese Aufgabe wird durch eine Empfangsschaltung mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist eine Empfangsschaltung zum Empfangen eines Signals einer Amplitudenumtastung vorgesehen. Die Empfangsschaltung weist einen Empfangspfad auf in dem zumindest ein erstes Übertragungsglied, eine Auswertelogik, ein Summierer und ein Demodulator vorgesehen sind. Vorzugsweise ist die Empfangsschaltung auf einem Halbleiterchip monolithisch integriert.

Das erste Übertragungsglied ist zur Aufteilung eines In-Phase-Eingangsignals und eines Quadratur-Phase-Eingangssignals in eine Anzahl von Ausgangssignalen an einer Anzahl von Ausgängen ausgebildet. Vorzugsweise werden die Ausgangssignale nachfolgend getrennt weiterverarbeitet.

Dabei ist das erste Übertragungsglied ausgebildet ein Exponenten-Signal als Ausgangssignal mit einem Wert eines Exponenten zur Basis 2 an einem Exponenten-Ausgang der Anzahl von Ausgängen auszugeben. Zur Bestimmung des Exponenten wird vorzugsweise eine Normalisierung durchgeführt, indem zunächst eine führende Eins des In-Phase-Signals beziehungsweise des Quadratur-Phase-Signals - je nach dem welcher Betrag größer ist - ermittelt wird. Aus der Wertigkeit der führenden Eins wird dann der Wert des Exponenten-Signals ermittelt.

Weiterhin ist das erste Übertragungsglied ausgebildet ein um den Exponenten bereinigtes In-Phase-Signal an einem In-Phase-Ausgang und ein um den Exponenten bereinigtes Quadratur-Phase-Signal an einem Quadratur-Phase-Ausgang der Anzahl von Ausgängen auszugeben. Vorzugsweise ist das erste Übertragungsglied dabei ausgebildet den Betrag des In-Phase-Signals und des Quadratur-Phase-Signals zu bilden. Demzufolge werden vorteilhafterweise alle Vektoren außerhalb des ersten Quadranten der I - Q - Ebene in den ersten Quadranten gespiegelt. Zur Bereinigung wird vorzugsweise eine Mantisse mit einer vorgegebenen Genauigkeit nach der Bestimmung des Exponenten bestimmt. Beispielsweise ist die Genauigkeit für das um den Exponenten bereinigte In-Phase-Signal und das um den Exponenten bereinigte Quadratur-Phase-Signal fünf Bit. Der Exponent wird vorzugsweise so gewählt, dass I' und Q' gerade in das Ausgangsformat passen. Für die beispielhaften 5 Bit beträgt der Ganzzahlanteil daher maximal 31, der größere Wert von I' und Q' ist vorteilhafterweise größer oder gleich 16. Alternativ ist es möglich die Beträge von I und Q in einer parallelen Division solange durch 2 zu dividieren, bis beide Werte (als I' und Q') kleiner oder gleich $2^N$-1 sind, wobei N die Ausgangswortbreite ist.

Die Empfangsschaltung weist zudem einen Summierer auf. Der Summierer kann auch als Addierer bezeichnet werden. Er weist mehrere Eingänge für mehrere Summanden aus, wobei deren Summe an einem Ausgang des Summierers ausgegeben wird.

Eine Auswertelogik der Empfangschaltung ist mit dem Summierer und dem ersten Übertragungsglied verbunden. Die Auswertelogik weist vorzugsweise eine Anzahl von Übertragungsgliedern auf, die jeweils eine oder mehrere Funktionen aufweisen. Das erste Übertragungsglied, die Auswertelogik und der Summierer bilden dabei eine an

$$A = k \cdot \log_2\left(\sqrt{I^2 + Q^2}\right) \qquad\qquad (1)$$

angenäherte Funktion ab. Wobei A die Amplitude, k ein Faktor und I das In-Phase-Signal und Q das Quadratur-Phase-Signal sind.

Der Summierer ist zur Bestimmung einer Amplitude aus mehreren Summanden ausgebildet. Die Auswertelogik ist zur Bestimmung mehrerer der Summanden aus dem Exponenten-Signal, aus dem um den Exponenten bereinigten In-Phase-Signal und aus dem um den Exponenten bereinigten Quadratur-Phase-Signal ausgebildet. Die bestimmte Amplitude ist dabei der tatsächlich physikalisch übertragenen Signalamplitude angenähert. Vorzugsweise ist die Amplitude im logarithmischen Maßstab abgebildet. Vorzugsweise ist die Auswertelogik zur Bestimmung eines oder mehrerer Summanden durch Bildung eines Logarithmus zur Basis 2 von einer Funktion ausgebildet, wobei die Funktion das um den Exponenten bereinigte In-Phase-Signal und das um den Exponenten bereinigte Quadratur-Phase-Signal umfasst.

Die Amplitude wird dabei aus dem Exponenten-Signal, aus dem um den Exponenten bereinigten In-Phase-Signal und aus dem um den Exponenten bereinigten Quadratur-Phase-Signal bestimmt. Zusätzlich wird vorteilhafterweise ein oder mehrere weitere Signale - beispielsweise ein zur Verstärkung eines steuerbaren Eingangsverstärkers zugeordnetes Steuersignal - zur Bestimmung der Amplitude mittels des Summierers addiert.

Vorteilhafterweise ist eine Entscheiderschaltung für die Amplitudenumtastung einem Ausgang des Summierers im Empfangspfad nachgeschaltet. Die Entscheiderschaltung kann aus als Auswerteschaltung bezeichnet werden. Die Entscheiderschaltung ist vorzugsweise derart ausgebildet, dass das Ausgangssignal des Summierers mit einem Schwellwert verglichen wird. Vorzugsweise wird das Ausgangssignal des Summierers zuvor gefiltert. Bevorzugt ist vorgesehen, dass der Schwellwert aus dem Ausgangssignal des Summierers insbesondere durch Mittelung ermittelt wird.

Der Erfindung liegt weiterhin die Aufgabe zu Grunde ein möglichst verbessertes Verfahren zum Empfang anzugeben.

Diese Aufgabe wird durch das Verfahren mit den Merkmalen des unabhängigen Anspruchs 13 gelöst. Vorteilhafte Weiterbildungen sind Gegenstand von abhängigen Ansprüchen und in der Beschreibung enthalten.

Demzufolge ist ein Verfahren zum Empfangen eines Signals einer Amplitudenumtastung vorgesehen.

Aus einem empfangenen In-Phase-Eingangssignal und einem empfangenen Quadratur-Phase-Eingangssignal werden zumindest ein Exponenten-Signal, ein um den Exponenten bereinigtes In-Phase-Signal und ein um den Exponenten bereinigtes Quadratur-Phase-Signal erzeugt.

Eine Amplitude wird als Summe aus mehreren Summanden bestimmt. Die Summanden werden aus dem Exponenten-Signal und/oder aus dem um den Exponenten bereinigten In-Phase-Signal und/oder aus dem um den Exponenten bereinigten Quadratur-Phase-Signal bestimmt.

Die Amplitude wird nachfolgend ausgewertet. Beispielsweise wird die Amplitude hierzu mit einem Schwellwert verglichen. Dieser kann beispielsweise fest vorgegeben werden oder aus der Amplitude selbst, beispielsweise mittels einer Tiefpassfunktion, errechnet werden.

Der Erfindung liegt weiterhin die Aufgabe zu Grunde, eine Verwendung anzugeben.

Diese Aufgabe wird durch eine Verwendung mit den Merkmalen des unabhängigen Anspruchs 14 gelöst. Vorteilhafte Weiterbildungen sind Gegenstand von abhängigen Ansprüchen und in der Beschreibung angegeben.

Demzufolge ist eine Verwendung eines um einen Exponenten bereinigten In-Phase-Signals und eines um den Exponenten bereinigten Quadratur-Phase-Signals einer Amplitudenumtastung zur Bestimmung einer Amplitude und zur Demodulation einer Amplitudenumtastung vorgesehen.

Die im Folgenden beschriebenen Weiterbildungen beziehen sich sowohl auf die Empfangsschaltung, als auch auf die Verwendung als auch auf das Verfahren zum Empfangen.

In einer vorteilhaften Weiterbildung ist vorgesehen, dass die Auswertelogik der Empfangsschaltung ein zweites Übertragungsglied aufweist, das mit dem In-Phase-Ausgang und dem Quadratur-Phase-Ausgang des ersten Übertragungsglieds verbunden ist.

Das zweite Übertragungsglied ist ausgebildet an seinem ersten Ausgang das um den Exponenten bereinigte In-Phase-Signal auszugeben, wenn das um den Exponenten bereinigte Quadratur-Phase-Signal kleiner ist als das um den Exponenten bereinigte In-Phase-Signal.

Das zweite Übertragungsglied ist zudem ausgebildet an seinem ersten Ausgang das um den Exponenten bereinigte Quadratur-Phase-Signal auszugeben, wenn das um den Exponenten bereinigte In-Phase-Signal kleiner ist als das um den Exponenten bereinigte Quadratur-Phase-Signal.

Weiterhin ist das zweite Übertragungsglied ausgebildet an seinem zweiten Ausgang das um den Exponenten bereinigte Quadratur-Phase-Signal auszugeben, wenn das um den Exponenten bereinigte Quadratur-Phase-Signal kleiner ist als das um den Exponenten bereinigte In-Phase-Signal.

Weiterhin ist das zweite Übertragungsglied zudem ausgebildet an seinem zweiten Ausgang das um den Exponenten bereinigte In-Phase-Signal auszugeben, wenn das um den Exponenten bereinigte In-Phase-Signal kleiner ist als das um den Exponenten bereinigte Quadratur-Phase-Signal.

Entspricht der Wert des um den Exponenten bereinigten In-Phase-Signals dem des um den Exponenten bereinigten Quadratur-Phase-Signals wird an dem ersten Ausgang und an dem zweiten Ausgang derselbe Wert ausgegeben.

Vorteilhafterweise weist das zweite Übertragungsglied einen Vergleicher und einen Multiplexer auf. Der Multiplexer wird vorzugsweise in Abhängigkeit von einem Vergleichsergebnis des Vergleichers gesteuert. Ein Eingang des Vergleichers ist jeweils mit einem Eingang des zweiten Übertragungsglieds verbunden. Der Vergleicher vergleicht dabei zeitgleiche Werte des um den Exponenten bereinigten In-Phase-Signals und des um den Exponenten bereinigten Quadratur-Phase-Signals miteinander. Entsprechend den zuvor erläuterten Bedingungen wird der Multiplexer angesteuert um das um den Exponenten bereinigte In-Phase-Signal beziehungsweise das um den Exponenten bereinigte Quadratur-Phase-Signal auf den entsprechenden Ausgang zu schalten.

Gemäß einer anderen vorteilhaften Weiterbildung weist die Auswertelogik ein drittes Übertragungsglied auf. Das dritte Übertragungsglied ist für eine Arkustangensfunktion (atan) ausgebildet. Dabei ist das dritte Übertragungsglied vorteilhafterweise ausgebildet für vorzugsweise zeitgleiche Werte des um den Exponenten bereinigten In-Phase-Signals und des um den Exponenten bereinigten Quadratur-Phase-Signals einen genäherten Arkustangenswert an seinem Ausgang auszugeben.

Bevorzugt sind hierzu die Eingänge des dritten Übertragungsglieds mit dem ersten Ausgang und mit dem zweiten Ausgang des zweiten Übertragungsglieds verbunden. Demzufolge liegt an einem ersten Eingang des dritten Übertragungsglieds, das mit dem ersten Ausgang des zweiten Übertragungsglieds verbunden ist stets das größere oder gleich große Signal aus den um den Exponenten bereinigten In-Phase-Signal und Quadratur-Phase-Signal an. Hingegen liegt an einem zweiten Eingang des dritten Übertragungsglieds, das mit dem zweiten Ausgang des zweiten Übertragungsglieds verbunden ist stets das kleinere oder gleich große Signal aus den um den Exponenten bereinigten In-Phase-Signal und Quadratur-Phase-Signal an.

In einer bevorzugten Ausgestaltung weist die Auswertelogik ein viertes Übertragungsglied auf. Der Eingang des vierten Übertragungsglieds ist mit einem Ausgang des dritten Übertragungsglieds verbunden. Das vierte Übertragungsglied ist zur Bestimmung eines Näherungswertes des Logarithmus zur Basis 2 von der Quadratwurzel aus der Summe von 1 und dem Quadrat des Tangens vom Ausgangssignal des dritten Übertragungsglieds ausgebildet. Beispielsweise kann die Funktion durch eine Rechenoperation genau berechnet werden.

Die Ausgestaltung weiterbildend ist vorgesehen, dass das vierte Übertragungsglied zur Bestimmung des Näherungswertes eine Tabelle mit Ausgangssignalwerten des dritten Übertragungsglieds zugeordneten Ausgabewerten aufweist. Beispielsweise kann jedem Eingangswert genau ein Ausgangswert in der Tabelle zugeordnet sein. Alternativ enthält die Tabelle Stützpunkte, wobei Eingangswerte zwischen den Stützpunkten durch lineare Interpolation ermittelt oder einem nächsten Stützpunkt zugeordnet werden. In Abhängigkeit von der Anzahl der Stützstellen und der Rundung der Ausgangswerte kann die Genauigkeit der Übertragungsfunktion des vierten Übertragungsglieds eingestellt werden.

Vorzugsweise ist ein Ausgang des vierten Übertragungsglieds mit einem Eingang des Summierers verbunden.

Gemäß einer anderen vorteilhaften Weiterbildung ist vorgesehen, dass die Auswertelogik ein fünftes Übertragungsglied aufweist. Ein Eingang des fünften Übertragungsglieds ist mit dem ersten Ausgang des zweiten Übertragungsglieds verbunden. Ein Ausgang des zweiten Übertragungsglieds ist mit einem Eingang des Summierers verbunden. Das fünfte Übertragungsglied ist vorzugsweise zur Ausgabe eines Näherungswertes des Logarithmus zur Basis 2 des Eingangswerts ausgebildet.

In einer vorteilhaften Weiterbildung ist das erste Übertragungsglied ausgebildet ein Quadranten-Signal als Ausgangssignal mit einem Wert für jeden Quadranten des Einheitskreises an einem Quadrant-Ausgang der Anzahl von Ausgängen auszugeben. Der jeweilige Quadrant ist dabei durch die Vorzeichen des In-Phase-Signals und des Quadratur-Phase-Signals festgelegt.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen

Fig.1    ein erstes Ausführungsbeispiel einer Empfangsschaltung, und

Fig 2    ein zweites Ausführungsbeispiel einer Empfangsschaltung

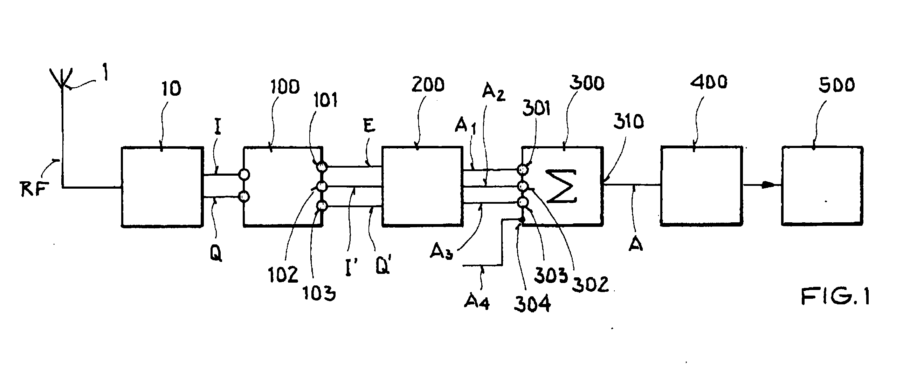

In Fig. 1 ist eine Empfangsschaltung durch ein Blockschaltbild schematisch dargestellt. Über eine Antenne 1 wird dabei ein Empfangssignal RF empfangen. Alternativ zur Antenne 1 könnte auch eine Kabelverbindung oder ein optischer Leiter vorgesehen sein. Das Empfangssignal gelangt im Empfangpfad zunächst zu einer Eingangsschaltung 10. In dem Empfangpfad sind dabei alle Schaltungsteile angeordnet, die das Empfangssignal beeinflussen, verarbeiten oder auswerten. Die Eingangsschaltung 10 weist beispielsweise einen analogen Verstärker, einen lokalen Oszillator, einen analogen Mischer zum Heruntermischen des Empfangssignals RF auf ein Zwischenfrequenzsignal, Analogfilter, Digitalfilter und einen Analog-Digital-Umsetzer auf.

An den Ausgängen der Eingangsschaltung 10 werden ein In-Phase-Eingangssignal I und ein Quadratur-Phase-Eingangssignal Q abgegeben.

Das digitale In-Phase-Eingangssignal I und das digitale Quadratur-Phase-Eingangssignal Q liegen an den Eingängen eines ersten Übertragungsglieds 100 im Empfangpfad an. Das erste Übertragungsglied weist zudem drei Ausgänge 101, 102 und 103 auf, die mit Eingängen einer Auswertelogik 200 verbunden sind.

Das erste Übertragungsglied 100 dient der Aufteilung eines In-Phase-Eingangsignals I und eines Quadratur-Phase-Eingangsignals Q in eine Anzahl von Ausgangssignalen E, I', Q'. Diese Ausgangssignale E, I', Q' werden an einer Anzahl von Ausgängen 101, 102, 103 ausgegeben. Das erste Übertragungsglied 100 ist ausgebildet ein Exponenten-Signal E als Ausgangssignal mit einem Wert eines Exponenten zur Basis 2 an einem Exponenten-Ausgang 101 auszugeben. Das Exponenten-Signal E wird beispielsweise durch eine Normalisierung des In-Phase-Eingangsignals I und des Quadratur-Phase-Eingangsignals Q für eine Gleitkommazahl mit dem gleichen Exponenten zur Basis 2 ermittelt.

Weiterhin ist das erste Übertragungsglied 100 ausgebildet ein um den Exponenten bereinigtes In-Phase-Signal I' an einem In-Phase-Ausgang 102 und ein um den Exponenten bereinigtes Quadratur-Phase-Signal Q' an einem Quadratur-Phase-Ausgang 103 der Anzahl von Ausgängen auszugeben. Bei identischen Exponenten verbleiben bei der Bereinigung die Mantissen I' und Q' des In-Phase-Eingangsignals I und des Quadratur-Phase-Eingangsignals Q. Die Auflösung der Mantissen I' und Q' als um den Exponenten bereinigtes In-Phase-Signal I' und um den Exponenten bereinigtes Quadratur-Phase-Signal Q' ist vorteilhafterweise vorgegeben, so dass der Rechenaufwand für nachfolgende digitale Berechnungen vorteilhaft reduziert werden kann. Die Aufteilung in Exponenten-Signal E und Mantissen I' und Q' bewirkt den überraschenden Effekt, dass die Berechnung von Vektoren in der I-Q-Ebene durch eine Reduktion der Bitbreite rechentechnisch erheblich vereinfacht wird. Das erste Übertragungsglied 100 gibt nur die Beträge der vorzeichenbehafteten Signale I' und Q' weiter, da die Vorzeichen für die Amplitudenbestimmung im Ausführungsbeispiel der Fig. 1 nicht benötigt werden. Zusätzlich können die Vorzeichen über den Ausgang 104 für eine Frequenzumtastung (FSK) ausgegeben werden.

Mit Ausgängen der Auswertelogik 200 sind Eingänge 301, 302, 303 eines Summierers 300 verbunden. Der Summierer kann auch als Addierer bezeichnet werden. Der Summierer gibt an seinem Ausgang 310 ein Summensignal aus, das die Amplitude A repräsentiert. Hierzu werden die einzelnen Summanden-Signale A1, A2, A3 und A4 an den Eingängen 301, 302, 303, 304 des Summierers 300 addiert. Im Ausführungsbeispiel der Fig.

1 wird der Summand A4 nicht von der Auswertelogik 200 bereitgestellt. Der Summand A4 wird beispielsweise aus einem Steuersignal zur Steuerung einer analogen Verstärkung des Empfangssignals RF in der Eingangsschaltung 10 bestimmt oder entspricht diesem. Demzufolge sind die Auswertelogik 200 und der Summierer 300 zur Bestimmung der Amplitude A zumindest aus dem Exponenten-Signal E, aus dem um den Exponenten bereinigten In-Phase-Signal I' und aus dem um den Exponenten bereinigten Quadratur-Phase-Signal Q' ausgebildet.

Mit dem Ausgang 310 des Summierers 300 ist im Empfangpfad eine Entscheiderschaltung 400 für die Amplitudenumtastung verbunden. Die demodulierten Signale können in einer nachfolgenden Recheneinheit 500 insbesondere hinsichtlich des Inhalts der Daten ausgewertet werden.

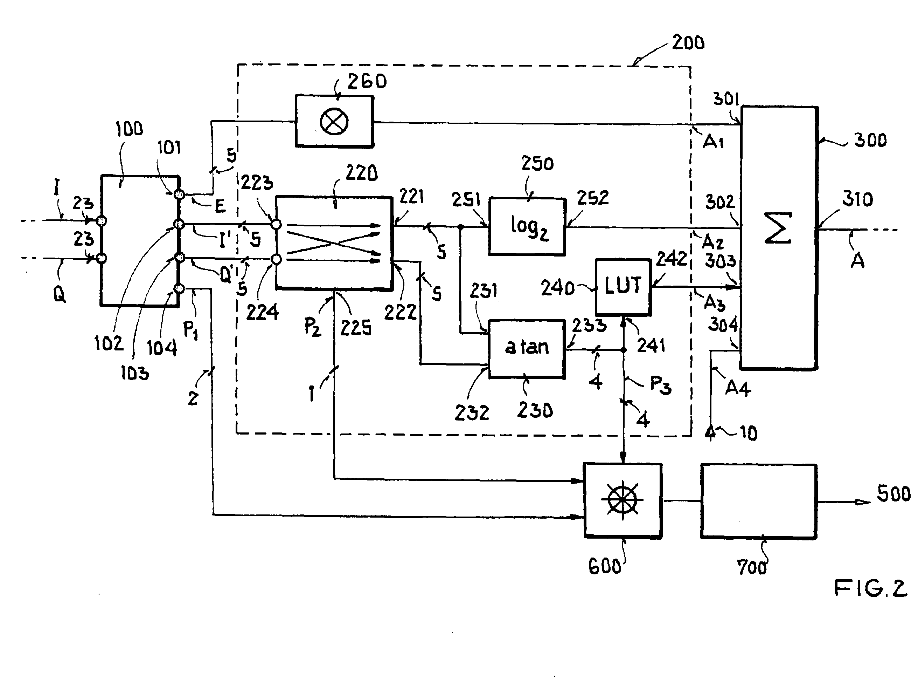

In Fig. 2 ist ein weiteres Ausführungsbeispiel als Blockschaltbild schematisch dargestellt. Wiederum sind das erste Übertragungsglied 100, die Auswertelogik 200 und der Summierer 300 vorgesehen. Ein gewünschtes Ausgangssignal A des Summierers 300 soll dabei der Funktion

$$A = k \cdot \log_2(\sqrt{I^2 + Q^2}) \qquad . \tag{1}$$

angenähert werden. Dabei sind A die Amplitude, k ein Faktor und I das In-Phase-Signal und Q das Quadratur-Phase-Signal. Im Ausführungsbeispiel der Fig. 2 werden die Vorzeichen von dem In-Phase-Signal I und dem Quadratur-Phase-Signal zur Ermittelung des Signals A nicht benötigt. Die Vorzeichen werden daher im ersten Übertragungsglied 100

EP 2 093 956 A2

entfernt. Für den Faktor k wird vorteilhafterweise eine 2er Potenz (z.B. 16 oder 32) gewählt, damit das Übertragungsglied 260 einfach zu realisieren ist.

Die Eingänge des ersten Übertragungsglieds 100 weisen im Ausführungsbeispiel der Fig. 2 jeweils eine Bit-Breite von 23 Bit auf. Je nach Empfänger können auch andere Bit-Breiten vorgesehen sein. Zusätzlich können, wie in Fig. 1 beispielhaft angedeutet, weitere Schaltungsteile vorgesehen sein. Die Auswertelogik 200 weist ein zweites Übertragungsglied 220, ein drittes Übertragungsglied 230, ein viertes Übertragungsglied 240, ein fünftes Übertragungsglied 250 und ein sechstes Übertragungsglied 260 auf. In anderen Ausführungsformen können einzelne Übertragungsglieder der Auswertelogik 200 auch fortgelassen oder durch andere Übertragungsglieder ersetzt werden.

Im ersten Übertragungsglied 100 erfolgt zunächst eine Normalisierung, mittels derer das In-Phase-Signal I und das Quadratur-Phase-Signal Q um einen Exponenten E bereinigt werden, so dass gilt:

$$I' = \frac{|I|}{2^E} \qquad \text{und} \qquad Q' = \frac{|Q|}{2^E} \qquad\qquad (2)$$

Wird dies in Formel (1) eingesetzt folgt:
$$A = A_1 + A_2 = k \cdot E + k \cdot \log_2(\sqrt{I'^2 + Q'^2}) \qquad\qquad (3)$$

Die Amplitude A wird dabei in logarithmischer Form zur Basis 2 ausgegeben. Vorteilhafterweise ist die Auswertelogik 200 zur Bestimmung eines oder mehrerer Summanden A1, A2 mittels der Funktion (3) ausgebildet. In der Funktion (3) sind A die Amplitude, k ein Faktor, E das Exponenten-Signal, I' das um den Exponenten bereinigte In-Phase-Signal und Q' das um den Exponenten bereinigte Quadratur-Phase-Signal.

Ein erster Eingang 223 des zweiten Übertragungsglieds 220 ist mit dem In-Phase-Ausgang 102 des ersten Übertragungsglieds 100 verbunden. Ein zweiter Eingang 224 des zweiten Übertragungsglieds 220 ist mit dem Quadratur-Phase-Ausgang 103 des ersten Übertragungsglieds 100 verbunden. Beide Verbindungen weisen im Ausführungsbeispiel der Fig. 2 eine Bitbreite von 5 Bit auf. Je nach gewünschter Auflösung kann auch eine höhere oder niedrigere Bitbreite verwendet werden. Das zweite Übertragungsglied 220 weist einen ersten Ausgang 221 und einen zweiten Ausgang 222 auf.

Die Funktion des zweiten Übertragungsgliedes 220 ist es, an dem ersten Ausgang das betragsmäßig größere Signal von dem um den Exponenten bereinigten In-Phase-Signal I' und dem um den Exponenten bereinigten Quadratur-Phase-Signal Q' auszugeben, und an dem zweiten Ausgang das betragsmäßig kleinere Signal von dem um den Exponenten bereinigten In-Phase-Signal I' und dem um den Exponenten bereinigten Quadratur-Phase-Signal Q' auszugeben. Weisen beide Signale I', Q' denselben Wert auf, ist der ausgegebene Wert an dem ersten Ausgang und dem zweiten Ausgang identisch.

Demzufolge gilt:

$$a = I' \quad b = Q', \text{ wenn } I' > Q' \qquad\qquad (4)$$

$$a = Q' \quad b = I', \text{ wenn } I' < Q' \qquad\qquad (5)$$

Dabei wird der Wert a am Ausgang 221 und der Wert b am Ausgang 222 ausgegeben. Für I' = Q' kann eine beliebige Zuordnung gewählt werden. Eingesetzt in Formel (3) folgt:

6

$$A = k \cdot \left[ E + \log_2(\sqrt{a'^2 + b'^2}) \right] \tag{6}$$

Demzufolge gelangt das größere Signal vom ersten Ausgang des zweiten Übertragungsglieds 220 zu einem ersten Eingang 231 eines dritten Übertragungsglieds 230. Weiterhin gelangt dieses Signal an einen Eingang 251 eines fünften Übertragungsglieds 250. Der zweite Ausgang 222 des zweiten Übertragungsglieds 220 ist mit einem zweiten Eingang 232 des dritten Übertragungsglieds 230 verbunden. Das dritte Übertragungsglied 230 weist eine Arcustangens-Funktion auf. Dabei bildet das dritte Übertragungsglied 230 jeweils einen Arcustangens-Wert aus dem Wert des Signals am ersten Eingang 231 zu dem Wert des Signals am zweiten Eingang 232, wobei der Wert am ersten Eingang 231 stets größer oder gleich dem Wert am zweiten Eingang 232 ist.

Das dritte Übertragungsglied 230 ermittelt daher einen Winkel f, der als Signal P3 ausgegeben wird. Dabei gilt:

$$\varphi = \arctan\left(\frac{b}{a}\right) \tag{7}$$

Dabei ist 0° = f = 45°, weil a a = b und a = 0, b = 0

Dabei zeigt das Ausführungsbeispiel der Fig. 2 den überraschenden Effekt, wie effizient durch die geeignete Datenzerlegung die Symmetrie der Arcustangens-Funktion, bzw. der Arcuscotangens-Funktion für eine einfache Berechnung ausgenutzt werden kann.

Soll die Länge eines Vektors in der I-Q-Ebene bestimmt werden, so wird der Vektor bereits im ersten Übertragungsglied um den Exponenten gekürzt, wobei der Exponent in einem sechsten Übertragungsglied 260 mit einem Faktor multipliziert und als Summand A1 dem ersten Eingang 301 des Summierers 300 zugeführt wird. Weiterhin wird der Vektor in der I-Q-Ebene um das Vorzeichen bereinigt, indem alle Vektoren in den ersten Quadranten gespiegelt werden. Der Exponent wird im Ausführungsbeispiel der Fig. 2 mit einer Auflösung von 5 Bit dargestellt, Wird der verbleibende Vektor in seine I' und Q' Bestandteile zerlegt, wird im zweiten Übertragungsglied 220 zunächst der größere Bestandteil von I' und Q' bestimmt und am Ausgang 221 ausgegeben. Zu diesem Signal des größeren Bestandteils von I' und Q' wird nachfolgend in dem fünften Übertragungsglied der Logarithmus zur Basis 2 bestimmt und am Ausgang 252 des fünften Übertragungsgliedes 250 als zweiter Summand A2 zum Eingang 302 des Summierers 300 ausgegeben.

Dabei ist

$$A2 = k \cdot \log_2(a) \qquad \text{und} \qquad A1 = k \cdot E \tag{8}$$

Der am Ausgang 233 des dritten Übertragungsglieds 230 ausgegebene Arcustangens-Wert weist eine Auflösung von 4 Bit auf. Der Ausgang 233 des dritten Übertragungsglieds 230 ist mit dem Eingang 241 eines vierten Übertragungsglieds 240 verbunden. Das vierte Übertragungsglied 240 ist vorteilhafterweise zur Bestimmung eines Näherungswertes des Logarithmus zu Basis 2 von der Quadratwurzel aus der Summe von 1 und dem Quadrat des Tangens vom Ausgangssignal des dritten Übertragungsglieds 230 ausgebildet.

Demzufolge gilt:

$$A3 = k \cdot \log_2\left(\sqrt{1 + \tan^2 \varphi}\right) \tag{9}$$

dabei kann f aus Formel (7) eingesetzt werden.

Aufgrund der Bitbreite von 4 Bit im Ausführungsbeispiel der Fig. 2, können 16 verschiedene Werte am Eingang des vierten Übertragungsglieds anliegen. Zur einfachen Realisierung ist daher eine Tabelle LUT mit 16 Ausgabewerten für die 16 Eingangswerte vorgesehen. Das Ausgangssignal des vierten Übertragungsglieds 240 liegt als dritter Summand A3 an einem dritten Eingang 303 des Summierers 300 an.

Demzufolge gilt für das Ausführungsbeispiel der Fig. 2 die Funktion:

$$A = A1 + A2 + A3 = k \cdot E + k \cdot \log_2(a) + k \cdot \log_2\left(\sqrt{1 + \frac{b^2}{a^2}}\right) \qquad (10)$$

Vorteilhafterweise ist die Auswertelogik 200 zur Bestimmung eines oder mehrerer Summanden A1, A2, A3 mittels der Funktion (10) ausgebildet. Dabei sind A die Amplitude, A1, A2, A3 die Summanden, k ein Faktor, E das Exponenten-Signal, I' das um den Exponenten bereinigte In-Phase-Signal und Q' das um den Exponenten bereinigte Quadratur-Phase-Signal. Hierdurch wird eine deutliche Vereinfachung der Hardware verglichen mit einer Umsetzung der Funktion (3) in erzielt.

Wird zusätzlich zu der Amplitudenumtastung für eine Frequenzumtastung demoduliert, kann die Empfangsschaltung, wie im Ausführungsbeispiel der Fig. 2 dargestellt, um weitere Funktionsblöcke ergänzt werden. Das Übertragungsglied 600 setzt mehrere Phasensignale P1, P2, P3 zu einem Phasensignal zusammen, dass im Frequenz-Demodulator (FSK-Demodulator) 700, beispielsweise mittels einer digitalen PLL demoduliert wird. Das erste Übertragungsglied 100 stellt dabei mittel 2 Bits die Information P1 bezüglich des Quadranten bereit. Die Information P2 bezüglich desjenigen der beiden Oktanten des ermittelten Quadranten stellt ein Bit des zweiten Übertragungsglieds 220 bereit. Der Oktant wird durch das 4-Bit-breite Signal P3 nochmals in 15 Winkel oder 16 Winkel unterteilt.

Demzufolge ist eine Auflösung von maximal 360°/120 = 3° beziehungsweise 360°/128 = 2,8125° erzielbar.

Die Erfindung ist nicht auf die dargestellten Ausgestaltungsvarianten der Figuren 1 oder 2 beschränkt. Beispielsweise ist es möglich die Frequenzumtastung fortzulassen. Ebenfalls ist es möglich anstelle der in Fig. 2 dargestellten Auswertelogik eine andere Logik, beispielsweise eine Berechnung aus den Signalen E, I' und Q' mittels Algorithmen vorzusehen. Auch ist es theoretisch möglich anstelle der digitalen Schaltung eine analoge Schaltung mit analogen Schaltungsblöcken 100, 200 und 300 vorzusehen. Die angegebenen Bitbreiten sind nur beispielhaft und hängen von Genauigkeitsanforderungen und der Dynamik des Systems ab.

Bezugszeichenliste

| 1 | Antenne |
|---|---|
| 10 | Eingangsschaltung |
| 100, 220, 230 240, 250, 260,600 | Übertragungsglied |
| | 200 |
| Auswertelogik | 223, 224, 231, 232, 241, |
| Eingang | 251, 301, 302, 303, 304 |
| 101, 102, 103, 104, 221, | Ausgang |
| 222, 225, 233, 242, 252, | 310 |
| 300 | Summierer |
| 400 | Entscheiderschaltung des ASK-Demodulators |
| 500 | Recheneinheit |
| 700 | FSK-Demodulator |
| A | Amplitude, Summe |
| A1, A2, A3, A4 | Summanden |
| I | In-Phase-Eingangssignal |
| Q | Quadratur-Phase-Eingangssignal |
| E | Exponenten-Signal |
| I' | um den Exponenten bereinigtes In-Phase-Signal |

Q'                             um den Exponenten bereinigtes Quadratur-Phase-Signal
P1, P2, P3                      phasenbezogene Signale
RF                             Empfangssignal


**Patentansprüche**

**1.**  Empfangsschaltung zum Empfangen eines Signals (RF) einer Amplitudenumtastung,

- mit einem ersten Übertragungsglied (100),
- mit einer Auswertelogik (200) und
- mit einem Summierer (300),
- bei der das Übertragungsglied zur Aufteilung eines In-Phase-Eingangsignals (I) und eines Quadratur-Phase-Eingangsignals (Q) in eine Anzahl von Ausgangssignalen (E, I', Q') an einer Anzahl von Ausgängen (101, 102, 103) ausgebildet ist,
- bei der das erste Übertragungsglied (100) ausgebildet ist ein Exponenten-Signal (E) als Ausgangssignal mit einem Wert eines Exponenten zur Basis 2 an einem Exponenten-Ausgang (101) der Anzahl von Ausgängen auszugeben,
- bei der das erste Übertragungsglied (100) ausgebildet ist ein um den Exponenten bereinigtes In-Phase-Signal (I') an einem In-Phase-Ausgang (102) und ein um den Exponenten bereinigtes Quadratur-Phase-Signal (Q') an einem Quadratur-Phase-Ausgang (103) der Anzahl von Ausgängen auszugeben,
- bei der die Auswertelogik (200) mit dem Summierer (300) und dem ersten Übertragungsglied (100) verbunden ist,
- bei der der Summierer zur Bestimmung einer Amplitude (A) als Summe aus mehreren Summanden (A1, A2, A3, A4) ausgebildet ist, und
- bei der die Auswertelogik (200) zur Bestimmung mehrerer der Summanden (A1, A2, A3) aus dem Exponenten-Signal (E), aus dem um den Exponenten bereinigten In-Phase-Signal (I') und aus dem um den Exponenten bereinigten Quadratur-Phase-Signal (Q') ausgebildet ist.

**2.**  Empfangsschaltung nach Anspruch 1,

- bei der die Auswertelogik (200) zur Bestimmung eines oder mehrerer Summanden (A2, A3) durch Bildung eines Logarithmus zur Basis 2 von einer Funktion mit dem um den Exponenten bereinigten In-Phase-Signal (I') und mit dem um den Exponenten bereinigten Quadratur-Phase-Signal (Q') ausgebildet ist.

**3.**  Empfangsschaltung nach Anspruch 1 oder 2,

- bei der die Auswertelogik (200) zur Bestimmung eines oder mehrerer Summanden (A1 ,A2) mittels der Funktion

$$A = A_1 + A_2 = k \cdot E + k \cdot \log_2\left(\sqrt{I'^2 + Q'^2}\right)$$

ausgebildet ist, wobei A die Amplitude, A1, A2, A3 die Summanden, k ein Faktor, E das Exponenten-Signal, I' das um den Exponenten bereinigte In-Phase-Signal und Q' das um den Exponenten bereinigte Quadratur-Phase-Signal sind.

**4.**  Empfangsschaltung nach Anspruch 1 oder 2,

- bei der die Auswertelogik (200) zur Bestimmung eines oder mehrerer Summanden (A1, A2, A3) mittels der Funktion

$$A = A1 + A2 + A3 = k \cdot E + k \cdot \log_2(a) + k \cdot \log_2\left(\sqrt{1 + \frac{b^2}{a^2}}\right)$$

mit

a = I' b = Q', wenn I'> Q' und

a = Q' b = I', wenn I'<Q' ausgebildet ist, wobei A die Amplitude, A1, A2, A3 die Summanden, k ein Faktor, E das Exponenten-Signal, I' das um den Exponenten bereinigte In-Phase-Signal und Q' das um den Exponenten bereinigte Quadratur-Phase-Signal sind.

**5.** Empfangsschaltung nach einem der vorhergehenden Ansprüche,

- bei der die Auswertelogik (200) ein zweites Übertragungsglied (220) aufweist, das mit dem In-Phase-Ausgang (102) und dem Quadratur-Phase-Ausgang (103) des ersten Übertragungsglieds (100) verbunden ist
- wobei das zweite Übertragungsglied (220) ausgebildet ist an seinem ersten Ausgang (221) das den Exponenten bereinigte In-Phase-Signal (I') auszugeben, wenn das um den Exponenten bereinigte Quadratur-Phase-Signal (Q') kleiner ist als das um den Exponenten bereinigte In-Phase-Signal (I'), und das den Exponenten bereinigte Quadratur-Phase-Signal (Q') auszugeben, wenn das um den Exponenten bereinigte In-Phase-Signal (I') kleiner ist als das um den Exponenten bereinigte Quadratur-Phase-Signal (Q'),
- wobei das zweite Übertragungsglied (220) ausgebildet ist an seinem zweiten Ausgang (222) das den Exponenten bereinigte Quadratur-Phase-Signal (Q') auszugeben, wenn das um den Exponenten bereinigte Quadratur-Phase-Signal (Q') kleiner ist als das um den Exponenten bereinigte In-Phase-Signal (I'), und das um den Exponenten bereinigte In-Phase-Signal (I') auszugeben, wenn das um den Exponenten bereinigte In-Phase-Signal (I') kleiner ist als das um den Exponenten bereinigte Quadratur-Phase-Signal (Q').

**6.** Empfangsschaltung nach einem der vorhergehenden Ansprüche, bei der die Auswertelogik (200) ein drittes Übertragungsglied (230) aufweist, wobei das dritte Übertragungsglied (230) für eine Arkustangensfunktion (atan) ausgebildet ist zur Ausgabe eines genäherten Arkustangenswerts von dem um den Exponenten bereinigten In-Phase-Signal (I') und dem um den Exponenten bereinigten Quadratur-Phase-Signal (Q') (als Eingangsgrößen).

**7.** Empfangsschaltung nach den Ansprüchen 5 und 6, bei der die Eingänge (231, 232) des dritten Übertragungsglieds (230) mit dem ersten Ausgang und (221) mit dem zweiten Ausgang (222) des zweiten Übertragungsglieds (220) verbunden sind.

**8.** Empfangsschaltung nach einem der Ansprüche 6 oder 7, bei der die Auswertelogik (200) ein viertes Übertragungsglied (240) aufweist, dessen Eingang (241) mit einem Ausgang (233) des dritten Übertragungsglieds (230) verbunden ist, wobei das vierte Übertragungsglied (240) zur Bestimmung eines Näherungswertes des Logarithmus zur Basis 2 von der Quadratwurzel aus der Summe von 1 und dem Quadrat des Tangens vom Ausgangssignal des dritten Übertragungsglieds (230) ausgebildet ist.

**9.** Empfangsschaltung nach Anspruch 8, bei der das vierte Übertragungsglied (240) zur Bestimmung des Näherungswertes eine Tabelle mit Ausgangssignalwerten des dritten Übertragungsglieds (230) zugeordneten Ausgabewerten aufweist.

**10.** Empfangsschaltung nach Anspruch 9, bei der ein Ausgang (242) des vierten Übertragungsglieds (240) mit einem Eingang (303) des Summierers (300) verbunden ist.

**11.** Empfangsschaltung nach einem der Ansprüche 5 bis 10, bei der die Auswertelogik (200) ein fünftes Übertragungsglied (250) aufweist, dessen Eingang (251) mit dem ersten Ausgang (221) des zweiten Übertragungsglieds (220) und dessen Ausgang (252) mit einem Eingang (302) des Summierers (300) verbunden sind, wobei das fünfte Übertragungsglied (250) zur Ausgabe eines Näherungswertes des Logarithmus zur Basis 2 des Eingangswerts ausgebildet ist.

**12.** Empfangsschaltung nach einem der vorhergehenden Ansprüche, bei der das erste Übertragungsglied (100) ausgebildet ist ein Quadranten-Signal als Ausgangssignal mit einem Wert für jeden Quadranten des Einheitskreises an einem Quadrant-Ausgang (104) der Anzahl von Ausgängen auszugeben.

**13.** Verfahren zum Empfangen eines Signals (RF) einer Amplitudenumtastung,

- bei dem aus einem In-Phase-Eingangssignal (I) und einem Quadratur-Phase-Eingangssignal (Q) zumindest ein Exponenten-Signal (E), ein um den Exponenten bereinigtes In-Phase-Signal (I') und ein um den Exponenten bereinigtes Quadratur-Phase-Signal (Q') erzeugt werden,

- bei dem eine Amplitude (A) als Summe aus mehreren Summanden (A1, A2, A3, A4) bestimmt wird, wobei die Summanden (A1, A2, A3, A4) aus dem Exponenten-Signal (E) und/oder aus dem um den Exponenten bereinigten In-Phase-Signal (I') und/oder aus dem um den Exponenten bereinigten Quadratur-Phase-Signal (Q') bestimmt werden, und
- bei dem die Amplitude (A) demoduliert wird.

14. Verwendung eines um einen Exponenten bereinigten In-Phase-Signals (I') und eines um den Exponenten bereinigten Quadratur-Phase-Signals (Q') einer Amplitudenumtastung zur Bestimmung einer Amplitude (A) und zur Demodulation einer Amplitudenumtastung.

FIG.1

FIG.2

EP 2 093 956 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006005032 A1
- DE 69224925 T2